# EUROPEAN PATENT APPLICATION

(11) **EP 4 621 471 A1**
(43) Date of publication of application: **24.09.2025**
(21) Application number: 24165158.7
(22) Date of filing: 21.03.2024
(51) Int. Cl.: G02B 21/34

(54) **AUTOMATIC COVERSLIPPER AND METHOD FOR AUTOMATICALLY APPLYING A COVERSLIP**

(71) Applicant: Leica Biosystems Nussloch GmbH, 69226 Nussloch (DE)
(72) Inventor: Hopermann, Hermann, 23847 Kastorf (DE)
(74) Representative: Schaumburg und Partner Patentanwälte mbB

(57) **Abstract**

An automatic coverslipper (100) comprises a receiving position (116) configured to receive a microscope slide (108), the microscope slide (108) having a mounting area (106) for arranging a thin section (104) thereon. The automatic coverslipper (100) also comprises a reservoir (118) configured to store a light-curable adhesive, and a liquid applicator (122) configured to apply the light-curable adhesive to at least part of the mounting area (106). The automatic coverslipper (100) further comprises a coverslip applicator (132) configured to apply the coverslip (102) to the mounting area (106), and a curing light source (136) configured to emit curing light for curing the light-curable adhesive.

## Description

### Technical fields

The invention relates to an automatic coverslipper. The method further relates to a method for automatically applying a coverslip to a microscope slide.

### Background

A coverslipper is a device used in the field of microscopy and histology to automatically place a coverslip on a microscope slide. The coverslip is a thin piece of glass or plastic that is placed over a specimen arranged on the microscope slide to protect the specimen. Coverslippers are in particular used in clinical and research laboratories that handle a high volume of microscope slides, such as those in hospitals, pathology labs, and research institutions. They are an essential part of the workflow in histology laboratories where thin tissue sections are processed, sectioned, stained, and then mounted on microscope slides for microscopic examination and/or archiving.

Typically, a mounting medium is applied to adhere the coverslip to the microscope slide. For long-term storage and archival of the microscope slides, the mounting medium is typically hardened to encase the specimen in a solid matrix, for example by evaporation or polymerization of the mounting medium. However, curing the mounting medium may take up to several days during which the mounting medium is still liquid. Vibrations during the curing period, such as those caused by automated slide handling in a slide scanner, may cause the mounting medium to leak from under the coverslip. The still liquid mounting medium may thereby come into contact with, for example, the objective of a slide scanner and cause the objective to become unusable. Therefore, microscope slides covered in this way can only be scanned after the mounting medium has completely cured which can take up to several days.

### Summary

It is an object to provide an automatic coverslipper and a method for automatically applying a coverslip that significantly reduce the time between covering the thin section and being able to image the thin section.

The aforementioned object is achieved by the subject-matter of the independent claims. Advantageous embodiments are defined in the dependent claims and the following description.

The proposed automatic coverslipper comprises a receiving position configured to receive a microscope slide, the microscope slide having a mounting area for arranging a thin section thereon. The automatic coverslipper also comprises a reservoir configured to store a light-curable adhesive, and a liquid applicator configured to apply the light-curable adhesive to at least part of the mounting area. The automatic coverslipper further comprises a coverslip applicator configured to apply the coverslip to the mounting area, and a curing light source configured to emit curing light for curing the light-curable adhesive.

It has been recognized that the use of the light-curable adhesive as a mounting medium to adhere the coverslip to the slide can significantly reduce the time between covering the thin section and being able to image the thin section using, for example, a slide scanner. By using the light-curable adhesive, the curing time of the mounting medium can be reduced from days to minutes.

The proposed automatic coverslipper is a fully integrated system comprising all components necessary to use the light-curable adhesive as the mounting medium. The light-curable adhesive is stored in the reservoir in its liquid state. By way of the liquid applicator, the liquid light-curable adhesive is applied to the mounting area before the coverslip applicator covers the thin section received in the mounting area with a coverslip. The light-curable adhesive is then cured using the integrated curing light source. The result of this fully automated process is a covered and fully cured slide that can then be imaged without the risk of the still liquid mounting medium coming into contact with the optical components of, for example, a slide scanner. Thus, the proposed coverslipper significantly reduces the waiting time before the covered thin section can be imaged.

In an embodiment the curing light source is a UV-lamp configured to emit UV-light, in particular UV-A-light. The use of an UV-lamp as the curing light source has the advantage that UV-curable adhesives may be used as the light-curable adhesive. UV-curable adhesives rapidly cure upon exposure to UV-light, allowing for quick bonding, thereby further reducing the waiting time before the covered thin section can be imaged. Additionally, UV-curable adhesives provide strong and durable bonds with a wide range of materials, including various plastics and glasses commonly used for microscope slides and coverslips.

In an embodiment the automatic coverslipper comprises a second reservoir configured to store a mounting medium. The liquid applicator may be configured to apply the mounting medium to at least part of the mounting area. The mounting medium may be curable, for example a second adhesive or a resin in a solvent. In particular, the mounting medium may have a longer curing time but may also be less aggressive to the thin section. Thereby, damage to the thin section is prevented allowing for long-time storage.

In another embodiment the liquid applicator comprises at least one first nozzle arrangeable and configured to apply the light-curable adhesive to at least part of the mounting area, and a second nozzle arrangeable and configured to apply the mounting medium to at least part of the mounting area. In particular, the first nozzle may be arrangeable and configured to apply the light-curable adhesive to an edge of the mounting area and the second nozzle may be arrangeable and configured to apply the mounting medium to a center of the mounting area. Thereby, the fast-curing light-curable adhesive seals the mounting medium in when the coverslip is applied to the microscope slide. This prevents the slow-curing mounting medium from leaking from under the coverslip and coming into contact with optical components of imaging device used to image the thin section.

In another embodiment the liquid applicator comprises at least two first nozzles. The tips of the at least two first nozzles are arrangeable and configured to apply the light-curable adhesive to an edge of the mounting area. The tip of the at least one second nozzle is arrangeable and configured to apply the mounting medium to a center of the mounting area. The tip of the at least one second nozzle may be arranged between the tips of the at least two first nozzles. This is a mechanically simple arrangement that allows the liquid applicator to apply the light-curable adhesive to the edge of the mounting area and to apply the mounting medium to the center of the mounting area. Applying the light-curable adhesive and the mounting medium this way has the above-described advantages of protecting the thin section for long time storage while allowing the thin section to be imaged quickly after applying the coverslip.

The invention further relates to a method for automatically applying a coverslip using the above-described automatic coverslipper. The method comprises the following steps: Arranging the microscope slide in the receiving position, a thin section being arranged on a mounting area of said microscope slide. Applying the light-curable adhesive to at least part of the mounting area using the liquid applicator. Applying the coverslip to the mounting area using the coverslip applicator. Curing the light-curable adhesive using the curing light source.

The method has the same advantages as the automatic coverslipper described above. In particular, the method may be supplemented with the features of the dependent claims directed at the automatic coverslipper. Furthermore, the automatic coverslipper described above may be supplemented with the features described in this document in connection with the method.

In an embodiment the light-curable adhesive is a UV-curable adhesive. UV-curable adhesives have the above-described advantages. In particular, UV-curable adhesives have a short curing time under the exposure to UV-light, which significantly speeds up the coverslipping process. UV-curable adhesives further form durable bonds, including bonds between materials commonly used for microscope slides and coverslips. This enables the secure storage of the covered microscope slides, for example for archiving pu rposes.

In another embodiment the light-curable adhesive has a curing time between 60 seconds and 120 seconds, when the light-curable adhesive has been applied with a layer thickness of 0.5 mm and exposed to a light intensity of 60 mW/cm². The curing time is defined as the duration required for the light-curable adhesive to reach a point where it has achieved the sufficient mechanical strength to fix the coverslip to the microscope slide while not being liquid anymore so that the light-curable adhesive cannot contaminate optical components of, for example, a slide scanner or similar imaging device. A curing time between 60 seconds and 120 seconds is sufficiently fast to speed up the coverslipping process. Many suitable adhesives have a curing time in the aforementioned range.

In another embodiment the light-curable adhesive is applied to an edge of the mounting area. By applying the light-curable adhesive to the edge of the mounting area the thin section is sealed in when the coverslip is applied. This conserves the thin section, for example for archiving purposes.

In another embodiment the mounting medium is applied to a center of the mounting area. Applying the mounting medium to the center of the mounting area further protects the thin section, helping to preserve the thin section for long time storage.

### Short Description of the Figures

Hereinafter, specific embodiments are described referring to the drawings, wherein:
- Figure 1: is a schematic view of an automatic coverslipper according to an embodiment; and
- Figure 2: is a flowchart of a method for automatically applying a coverslip to a microscope slide.

### Detailed Description

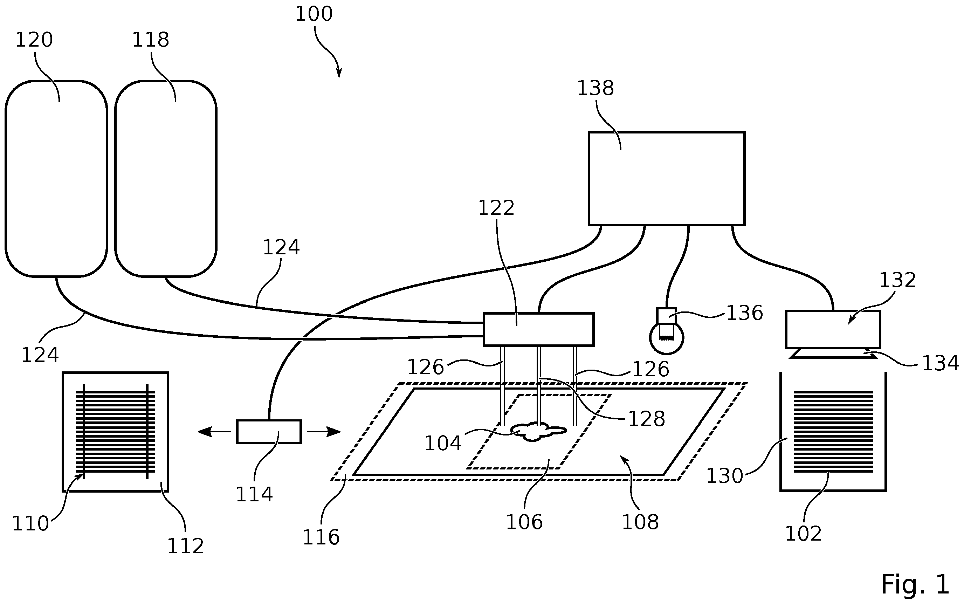

Figure 1 is a schematic view of an automatic coverslipper 100 according to an embodiment.

The automatic coverslipper 100 is configured to automatically apply a coverslip 102 to a thin section 104 received in a mounting area 106 of a microscope slide 108. In the embodiment shown in Figure 1, the microscope slide 108 is provided via a rack 110 that is received in an input compartment 112. A transport unit 114 is configured to remove the microscope slide 108 from the rack 110 and transport the microscope slide 108 to a receiving position 116 where the coverslip 102 is applied to the microscope slide 108. The transport unit 114 may further be configured to remove the covered microscope slide 108 from the receiving position 116 and to place the microscope slide 108 back into the rack 110. Alternatively, the single microscope slide 108 may be provided directly to and removed directly from the receiving position 116 either manually or automatically.

The automatic coverslipper 100 comprises a first reservoir 118 for storing a light-curable adhesive that is used to fix the coverslip 102 to the microscope slide 108. The light-curable adhesive may be an adhesive that is curable by UV-light, in particular UV-A-light. To prevent the light-curable adhesive from curing and/or degrading in the first reservoir 118, the first reservoir 118 is preferably a container made from a light-protective material. A second reservoir 120 is configured to hold a mounting medium that is applied to the microscope slide 108 for preserving the thin section 104. The mounting medium may be a second adhesive. The second reservoir 120 may also be a container made from light-protective material preventing the mounting medium from degrading before use.

The light-curable adhesive and the mounting medium are applied to the mounting area 106 of the microscope slide 108 by a liquid applicator 122 of the automatic coverslipper 100. The liquid applicator 122 is connected to the first and second reservoirs 118, 120 by fluid lines 126. The liquid applicator 122 comprises nozzles 126, 128 for applying the light-curable adhesive and the mounting medium to the microscope slide 108 and the thin section 104. The nozzles 126, 128 are exemplary formed as hollow needles and may be replaceable. Two first nozzles 126 are configured to apply the light-curable adhesive, and a second nozzle 128 is configured to apply the mounting medium. The tip of the second nozzle 128 is arranged between the tips of the first nozzles 126 so that the mounting medium can be applied to a center of the mounting area 106 where the thin section 104 is arranged while the light-curable adhesive can be applied to an edge of the mounting area 106 at the same time. The liquid applicator 122 is further configured to be moveable so that the first and second nozzles 126, 128 can be positioned above the mounting area 106 and moved during the application in order to apply the light-curable adhesive and the mounting medium to a larger area of the microscope slide 108.

The coverslip 102 is exemplary provided by a coverslip depot 130 comprising a number of coverslips stacked atop each other and applied to the microscope slide 108 by a coverslip applicator 132 of the automatic coverslipper 100. The coverslip applicator 132 exemplary comprises a suction cup 134 configured to pick up the coverslip 102 by creating a partial vacuum between the suction cup 134 and a top surface of the coverslip 102. The coverslip applicator 132 is further configured to be moveable so that the picked-up coverslip 102 can be positioned above the mounting area 106. The coverslip 102 is then applied by releasing the partial vacuum from the suction cup 134, thereby releasing the coverslip 102, and covering the thin section 104 with the released coverslip 102.

The automatic coverslipper 100 comprises a curing light source 136. The curing light source 136 is configured to emit curing light in a wavelength band suitable for curing the light-curable adhesive. For example, when the light-curable adhesive is curable by UV-light, the curing light source 136 is configured to emit UV-light. The curing light source 136 is exemplary arranged near the receiving position 116. This makes it possible to irradiate the microscope slide 108 with the curing light for curing the light-curable adhesive in the receiving position 116 itself. Alternatively, the transport unit 114 may be configured to move the microscope slide 108 to a separate curing position.

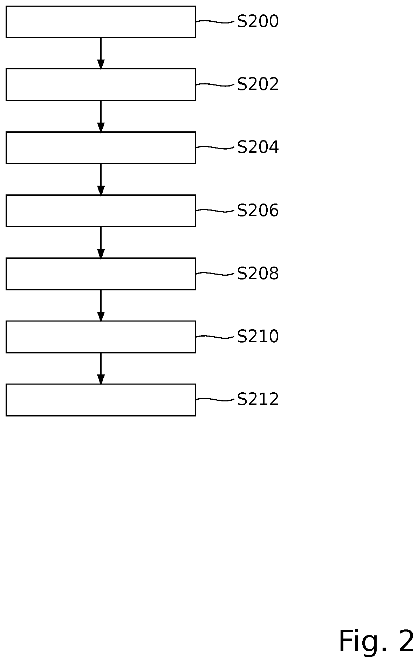

The automatic coverslipper 100 further comprises a control unit 138. The control unit 138 is connected to the transport unit 114, the liquid applicator 122, the coverslip applicator 132, and the curing light source 136. The control unit 138 is further configured to control the aforementioned elements to perform a method for automatically applying the coverslip 102 to the microscope slide 108. The method will be described in more detail in the following with reference to Figure 2.

Figure 2 is a flowchart of the method for automatically applying the coverslip 102 to the microscope slide 108.

The method is started in step S200. In step S202 the microscope slide 108 that is to be covered is provided to the receiving position 116. For example, the transport unit 114 removes the microscope slide 108 from the rack 110 provided in the input compartment 112 and moves the microscope slide 108 to the receiving position 116.

In step S204 the liquid applicator 122 places a predetermined amount of each of the light-curable adhesive and the mounting medium to the mounting area 106. For example, the liquid applicator 122 is first moved to be atop the mounting area 106. The liquid applicator 122 is then moved such that each of the two first nozzles 126 applies a strip of the light-curable adhesive to an edge of the mounting area 106 while the second nozzle 128 applies a strip of the mounting medium between the two strips of light-curable adhesive. To apply the light-curable adhesive to the two remaining edges of the mounting area 106, the liquid applicator 122 is moved again while at least one of the two first nozzles 126 applies a strip of the light-curable adhesive.

In step S206 the coverslip 102 is placed onto the thin section 104 received in the mounting area 106. For example, the coverslip applicator 132 picks up the coverslip 102 from the coverslip depot 130 utilizing the suction cup 134. The coverslip applicator 132 is then moved above the mounting area 106 and the coverslip 102 is released. The coverslip applicator 132 is then moved back into a waiting position. In step S208 the curing light source 136 is activated, and the microscope slide 108 is exposed to the curing light for a predetermined amount of time. After the predetermined amount of time has passed, the light-curable adhesive is cured, and the curing light source 136 is deactivated. The microscope slide 108 is now covered and may be further processed, for example being imaged, without the danger of a mounting medium leaking from under the coverslip 102. In step S210 the covered microscope slide 108 is then removed from the receiving position 116. For example, the transport unit 114 removes the microscope slide 108 from the receiving position 116 and puts the microscope slide 108 back into the rack 110 received in the input compartment 112. The method is then ended in step S212.

In the embodiment described with reference to Figures 1 and 2, at least the receiving position 116, the first reservoir 118, the liquid applicator 122, the coverslip applicator 132, and the curing light source 136 form the automatic coverslipper 100. Other elements and features shown in Figures 1 and 2 and mentioned in the preceding description may be a part of the automatic coverslipper 100. Likewise, method steps described with reference to the sensor device may be part of the claimed method.

In this document, the phrases " applying the coverslip to the microscope slide 108" and "applying the coverslip to the thin section " are used interchangeably. Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Coverslipper
- 102: Coverslip
- 104: Thin section
- 106: Mounting area
- 108: Microscope slide
- 110: Rack
- 112: Input compartment
- 114: Transport unit
- 116: Receiving position
- 118, 120: Reservoir
- 122: Liquid applicator
- 124: Fluid line
- 126, 128: Nozzle
- 130: Coverslip depot
- 132: Coverslip applicator
- 134: Suction cup
- 136: Curing light source
- 138: Control unit

## Claims

1. An automatic coverslipper (100), comprising
a receiving position (116) configured to receive a microscope slide (108), the microscope slide (108) having a mounting area (106) for arranging a thin section (104) thereon,
a reservoir (118) configured to store a light-curable adhesive,
a liquid applicator (122) configured to apply the light-curable adhesive to at least part of the mounting area (106),
a coverslip applicator (132) configured to apply the coverslip (102) to the mounting area (106), and
curing light source (136) configured to emit curing light for curing the light-curable adhesive.

2. The automatic coverslipper (100) according to claim 1, wherein the curing light source (136) is a UV-lamp configured to emit UV-light, in particular UV-A-light.

3. The automatic coverslipper (100) according to claim 1 or 2, comprising a second reservoir (120) configured to store a mounting medium, wherein the liquid applicator (122) is configured to apply the mounting medium to at least part of the mounting area (106).

4. The automatic coverslipper (100) according to claim 3, wherein the liquid applicator (122) comprises at least one first nozzle arrangeable and configured to apply the light-curable adhesive to at least part of the mounting area (106), and a second nozzle (128) arrangeable and configured to apply the mounting medium to at least part of the mounting area (106).

5. The automatic coverslipper (100) according to claim 4, wherein the liquid applicator (122) comprises at least two first nozzles (126),
wherein the tips of the at least two first nozzles (126) are arrangeable and configured to apply the light-curable adhesive to an edge of the mounting area (106),
wherein the tip of the at least one second nozzle (128) is arrangeable and configured to apply the mounting medium to a center of the mounting area (106), and
wherein the tip of the at least one second nozzle (128) is arranged between the tips of the at least two first nozzles (126).

6. A method for automatically applying a coverslip (102) to a microscope slide (108) using the automatic coverslipper (100) according to any one of the preceding claims, the method comprising:
a) arranging the microscope slide (108) in the receiving position (116), a thin section (104) being arranged on a mounting area (106) of said microscope slide (108);
b) applying the light-curable adhesive to at least part of the mounting area (106) using the liquid applicator (122);
c) applying the coverslip (102) to the mounting area (106) using the coverslip applicator (132); and
d) curing the light-curable adhesive using the curing light source (136).

7. The method according to claim 6, wherein the light-curable adhesive is a UV-curable adhesive.

8. The method according to claim 6 or 7, wherein light-curable adhesive has a curing time between 60 seconds and (120) seconds, when the light-curable adhesive has been applied with a layer thickness of 0.5 mm and exposed to a light intensity of 60 mW/cm².

9. The method according to any one of the claims 6 to 8, wherein the light-curable adhesive is applied to an edge of the mounting area (106).

10. The method according to claim 9, wherein the mounting medium is applied to a center of the mounting area (106).
